# EUROPEAN PATENT APPLICATION

(11) **EP 4 645 487 A1**
(43) Date of publication of application: **05.11.2025**
(21) Application number: 25162778.2
(22) Date of filing: 11.03.2025
(51) Int. Cl.: H01M 10/04, H01M 10/052, H01M 10/12, H01M 10/28, H01M 10/643, H01M 50/105, H01M 50/557, H01M 50/566, H01M 4/66, H01M 4/70, H01M 4/02, H01M 10/0525

(54) **COMPOSITE SUBSTRATE FOR RECHARGEABLE LITHIUM BATTERY AND RECHARGEABLE LITHIUM BATTERY INCLUDING THE SAME**

(30) Priority: 29.04.2024 KR 20240056865
(71) Applicant: SAMSUNG SDI CO., LTD., Yongin-si, Gyeonggi-do 17084 (KR)
(72) Inventor: Lee, KyuSeo, Yongin-si, Gyeonggi-do 17084 (KR); Hwang, Heeyeon, Yongin-si, Gyeonggi-do 17084 (KR); Kim, Suhyun, Yongin-si, Gyeonggi-do 17084 (KR); Cha, Jungwook, Yongin-si, Gyeonggi-do 17084 (KR); Kwon, Minseok, Yongin-si, Gyeonggi-do 17084 (KR); Kang, Dayoung, Yongin-si, Gyeonggi-do 17084 (KR)
(74) Representative: Michalski Hüttermann & Partner Patentanwälte mbB

(57) **Abstract**

Disclosed are composite substrates and rechargeable lithium batteries. The composite substrate includes a support layer, a first metal layer on a top surface of the support layer, and a second metal layer on a bottom surface of the support layer. At least one of the first metal layer and the second metal layer includes a first region to which a tab is configured to be attached, and a second region different from the first region. A ratio of surface roughness of the first region to surface roughness of the second region is in a range of 3.5 to 7.

## Description

### CROSS-REFERENCE TO RELATED APPLICATION

This application claims priority to Korean Patent Application No. 10-2024-0056865 filed on April 29, 2024 in the Korean Intellectual Property Office.

### BACKGROUND

The present disclosure relates to a composite substrate for a rechargeable lithium battery, and to a rechargeable lithium battery including the composite substrate.

With increasing spread of battery-using electronic devices, such as, e.g., mobile phones, laptop computers, electric vehicles, and the like, there is increasing demand for rechargeable batteries with high energy density and high capacity.

A rechargeable lithium battery typically includes a positive electrode, a negative electrode, and an electrolyte, the positive and negative electrodes including an active material in which intercalation and deintercalation are possible, and the rechargeable lithium battery generates electrical energy caused by oxidation and reduction reactions when lithium ions are intercalated and deintercalated.

### SUMMARY

An example embodiment of the present disclosure includes a composite substrate having desired or improved adhesive force and contact resistance with a tab.

An example embodiment of the present disclosure includes a rechargeable lithium battery including the composite substrate.

According to an example embodiment of the present disclosure, a composite substrate for a rechargeable lithium battery may include a support layer, a first metal layer on a top surface of the support layer, and a second metal layer on a bottom surface of the support layer. At least one of the first metal layer and the second metal layer may include a first region to which a tab is configured to be attached, and a second region different from the first region. A ratio of surface roughness of the first region to surface roughness of the second region may be in a range of 3.5 to 7.

In the present disclosure, the term "surface roughness" refers to a ten point average roughness (Rz), and is preferably measured according to ISO 4287. Rz is defined as the arithmetic mean of the absolute heights of the five highest peaks and the depths of the five deepest valleys within the evaluation length of the surface texture profile.

The measurement is performed using a contact profilometer or an equivalent device. A stylus is used to scan the surface over a predefined evaluation length, and the surface profile is recorded. The recorded profile is then analyzed using a cutoff filter to remove long-wavelength components. From the filtered profile, the five highest peaks and the five deepest valleys are identified, and their absolute heights are averaged to calculate Rz.

Unless otherwise specified, the cutoff wavelength is set to 0.8 mm, and the evaluation length is determined according to the recommendations of ISO 4288.

According to an example embodiment of the present disclosure, a rechargeable lithium battery may include a composite substrate that includes a support layer and a metal layer on the support layer; and a battery cell on the metal layer. The metal layer may include a first region to which a tab is configured to be attached, and a second region different from the first region. A ratio of surface roughness of the first region to surface roughness of the second region may be in a range of 3.5 to 7.

According to an example embodiment of the present disclosure, a rechargeable lithium battery may include a composite substrate that includes a support layer and a metal layer on the support layer, a first active material layer on the metal layer, a separator on the first active material layer, a second active material layer on the separator, a metal substrate on the second active material layer, a first tab attached to the metal layer, and a second tab attached to the metal substrate. The metal layer may include a first recess that is recessed by the first tab. The metal substrate may include a second recess that is recessed by the second tab. A depth of the first recess may be greater than a depth of the second recess.

### BRIEF DESCRIPTION OF DRAWINGS

FIG. 1 is a simplified conceptual diagram illustrating a rechargeable lithium battery according to an example embodiment of the present disclosure.
FIGS. 2 to 5 are simplified diagrams illustrating a rechargeable lithium battery according to an example embodiment of the present disclosure.
FIG. 6 is a cross-sectional view illustrating a rechargeable lithium battery according to an example embodiment of the present disclosure.
FIG. 7 is a plan view illustrating a first end portion of a composite substrate according to an example embodiment of the present disclosure.
FIG. 8 is a cross-sectional view taken along line A-A' of FIG. 7.
FIG. 9 is a cross-sectional view illustrating a second end portion of a metal substrate depicted in FIG. 6.
FIGS. 10 and 11 are cross-sectional views illustrating a method of fabricating a rechargeable lithium battery according to an example embodiment of the present disclosure.

### DETAILED DESCRIPTION OF EMBODIMENTS

In order to sufficiently understand the configuration and effect of the present disclosure, some example embodiments of the present disclosure will be described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it will be understood that, when an element is referred to as being "on" another element, the element can be directly on the other element or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B," "B but not A," and "A and B." The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter (D₅₀) where a cumulative volume is 50 volume % in a particle size distribution. The average particle diameter (D₅₀) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and then from this, an average particle diameter (D₅₀) value may be obtained through a calculation. Dissimilarly, a laser scattering method may be utilized to measure the average particle diameter (D₅₀). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter (D₅₀) is calculated in the 50% standard of particle diameter distribution in the measurement device.

When ranges are specified, the range includes all values therebetween such as increments of 0.1%.

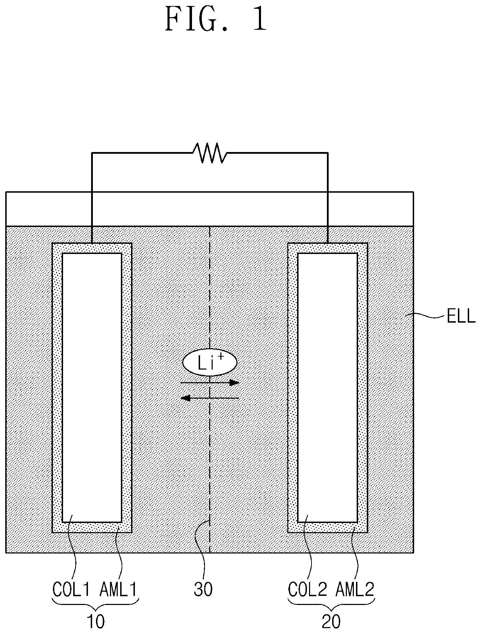

FIG. 1 is a simplified conceptual diagram illustrating a rechargeable lithium battery according to an example embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be or include a medium by which lithium ions are transferred between the positive electrode 10 and the negative electrode 20. In the electrolyte ELL, the lithium ions may move through the separator 30 toward one of the positive electrode 10 and the negative electrode 20.

### Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material and further include a binder and/or a conductive material.

For example, the positive electrode 10 may further include an additive that can constitute a sacrificial positive electrode.

An amount of the positive electrode active material may be 90 wt% to 99.5 wt% relative to 100 wt% of the positive electrode active material layer AML1. An amount of each, or at least one, of the binder and the conductive material may be 0.5 wt% to 5 wt% relative to 100 wt% of the positive electrode active material layer AML1.

The binder may improve attachment of positive electrode active material particles to each other and also to improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may provide an electrode with conductivity, and any suitable conductive material that does not cause a chemical change of a battery may constitute the conductive material to constitute the battery. The conductive material may include, for example, a carbon-based material such as at least one of natural graphite, artificial graphite, carbon black, acetylene black, Ketjen black, carbon fiber, carbon nano-fiber, and carbon nano-tube; a metal powder or metal fiber containing one or more of copper, nickel, aluminum, and silver; a conductive polymer such as a polyphenylene derivative; or a mixture thereof.

Aluminum (Al) may constitute the current collector COL1, but the present disclosure is not limited thereto.

### Positive Electrode Active Material

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is or includes at least one of cobalt, manganese, nickel, and a combination thereof.

The composite oxide may include a lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulae below. LiₐA_{1-b}X_{b}O_{2-c}D_{c} (where 0.90≤a≤1.8, 0≤b≤0.5, and 0≤c≤0.05); LiₐMn_{2-b}X_{b}O_{4-c}D_{c} (where 0.90≤a≤1.8, 0≤b≤0.5, and 0≤c≤0.05); LiₐNi_{1-b-c}Co_{b}X_{c}O_{2-α}D_{α} (where 0.90≤a≤1.8, 0≤b≤0.5, 0≤c≤0.5, and 0<α<2); LiₐNi_{1-b-c}Mn_{d}X_{c}O_{2-α}D_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0≤b≤0.9, 0≤c≤0.5, 0≤d≤0.5, and 0≤e≤0.1); LiₐNiG_{b}O₂ (where 0.90≤a≤1.8 and 0.001≤b≤0.1); LiₐCoG_{b}O₂ (where 0.90≤a≤1.8 and 0.001≤b≤0.1); LiₐMn_{1-b}G_{b}O₂ (where 0.90≤a≤1.8 and 0.001≤b≤0.1); LiₐMn₂G_{b}O₄ (where 0.90≤a≤1.8 and 0.001≤b≤0.1); LiₐMn_{1-g}G_{g}PO₄ (where 0.90≤a≤1.8 and 0≤g≤0.5); Li_{(3-f)}Fe₂(PO₄)₃ (where 0≤f≤2); LiₐFePO₄ (where 0.90≤a≤1.8).

In the chemical formulae above, A is or includes at least one of Ni, Co, Mn, or a combination thereof, X is or includes at least one of Al, Ni, Co, Mn, Cr, Fe, Mg, Sr, V, a rare-earth element, or a combination thereof, D is or includes at least one of O, F, S, P, or a combination thereof, G is or includes at least one of Al, Cr, Mn, Fe, Mg, La, Ce, Sr, V, or a combination thereof, and L¹ is or includes at least one of Mn, Al, or a combination thereof.

For example, the positive electrode active material may be or include a high-nickel-based positive electrode active material having a nickel amount of equal to or greater than 80 mol%, equal to or greater than 85 mol%, equal to or greater than 90 mol%, equal to or greater than 91 mol%, or equal to or greater than 94 mol% and equal to or less than 99 mol% relative to 100 mol% of metal devoid of lithium in the lithium transition metal composite oxide. The high-nickel-based positive electrode active material may achieve high capacity and thus may be applied to a high-capacity and high-density rechargeable lithium battery.

### Negative Electrode 20

The negative electrode 20 for a rechargeable lithium battery may include a current collector COL2 and a negative electrode active material layer AML2 positioned on the current collector COL2. The negative electrode active material layer AML2 may include a negative electrode active material, and may further include a binder and/or a conductive material.

For example, the negative electrode active material layer AML2 may include a negative electrode active material of 90 wt% to 99 wt%, a binder of 0.5 wt% to 5 wt%, and a conductive material of 0 wt% to 5 wt%.

The binder may improve attachment of negative electrode active material particles to each other, and also to improve attachment of the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder constitutes the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include at least one of Na, K, or Li.

The dry binder may include a fibrillizable polymer material such as, for example, at least one of polytetrafluoroethylene, polyvinylidene fluoride, polyvinylidene fluoride-hexafluoropropylene copolymer, polyethylene oxide, or a combination thereof.

The conductive material may provide an electrode with conductivity, and any suitable conductive material that does not cause chemical change of a battery may constitute the conductive material to constitute the battery. For example, the conductive material may include a carbon-based material such as at least one of natural graphite, artificial graphite, carbon black, acetylene black, Ketjen black, carbon fiber, carbon nano-fiber, and carbon nano-tube; a metal powder or metal fiber including one or more of copper, nickel, aluminum, and silver; a conductive polymer such as a polyphenylene derivative, or a mixture thereof.

The current collector COL2 may include at least one of a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as at least one of non-shaped, sheet-shaped, flake-shaped, sphere-shaped, or fiber-shaped natural or artificial graphite, and the amorphous carbon may include at least one of soft carbon, hard carbon, mesophase pitch carbon, or calcined coke.

The lithium metal alloy may include an alloy of lithium and metal that is or includes at least one of Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include at least one of silicon, silicon-carbon composite, SiOx (where 0<x<2), Si-Q alloy (where Q is alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include at least one of Sn, SnO₂, a Sn-based alloy, a combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles and may also include an amorphous carbon coating layer positioned on a surface of the core.

The Si-based negative electrode active material or the Sn-based negative electrode active material may be used in combination with a carbon-based negative electrode active material.

### Separator 30

Based on type of the rechargeable lithium battery, the separator 30 may be located between the positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one or opposite surfaces of the porous substrate, the coating layer including an organic material, an inorganic material, or a combination thereof.

The porous substrate may be or include a polymer layer including a polyolefin that includes at least one of polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be or include a copolymer or mixture including two or more of the materials mentioned above.

The organic material may include a polyvinylidenefluoride-based copolymer or a (meth)acrylic copolymer.

The inorganic material may include an inorganic particle that includes at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a combination thereof, but the present disclosure is not limited thereto.

The organic material and the inorganic material may be mixed in a single coating layer, or may be present as a stack of a coating layer including the organic material and a coating layer including an inorganic material.

### Electrolyte ELL

The electrolyte ELL for the rechargeable lithium battery may include a non-aqueous organic solvent and a lithium salt.

The non-aqueous organic solvent may constitute a medium for transmitting ions that participate in an electrochemical reaction of the battery.

The non-aqueous organic solvent may include at least one of a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include ethyl alcohol or isopropyl alcohol. The aprotic solvent may include nitriles such as R-CN (where R is a hydrocarbon group having a C2 to C20 linear, branched, or cyclic structure and may include a double bond, an aromatic ring, or an ether group); and amides such as dimethylformamide; dioxolanes such as 1,3-dioxolane or 1.4-dioxolane; or sulfolanes.

The non-aqueous organic solvent may be used alone or in a mixture of two or more solvents.

In addition, when a carbonate-based solvent is used, a cyclic carbonate and a chain carbonate may be mixed and used, and the cyclic carbonate and the chain carbonate may be mixed in a volume ratio of 1:1 to 1:9.

The lithium salt may be or include a material that is dissolved in the non-aqueous organic solvent to constitute a supply source of lithium ions in a battery and plays a role in enabling a basic operation of a rechargeable lithium battery and in promoting the movement of lithium ions between positive and negative electrodes. The lithium salt may include, for example, at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers between 1 to 20), lithium trifluoromethane sulfonate, lithium tetrafluoroethanesulfonate, lithium difluorobis(oxalato)phosphate (LiDFBOP), and lithium bis(oxalato)borate (LiBOB)

### Rechargeable Lithium Battery

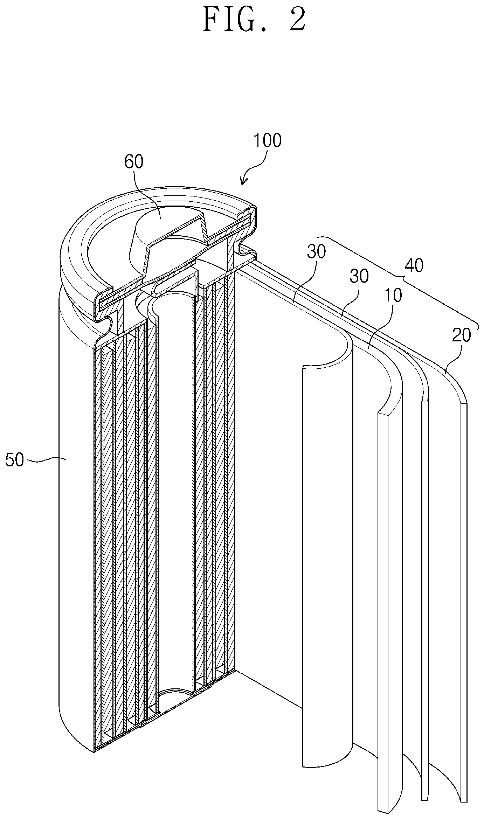

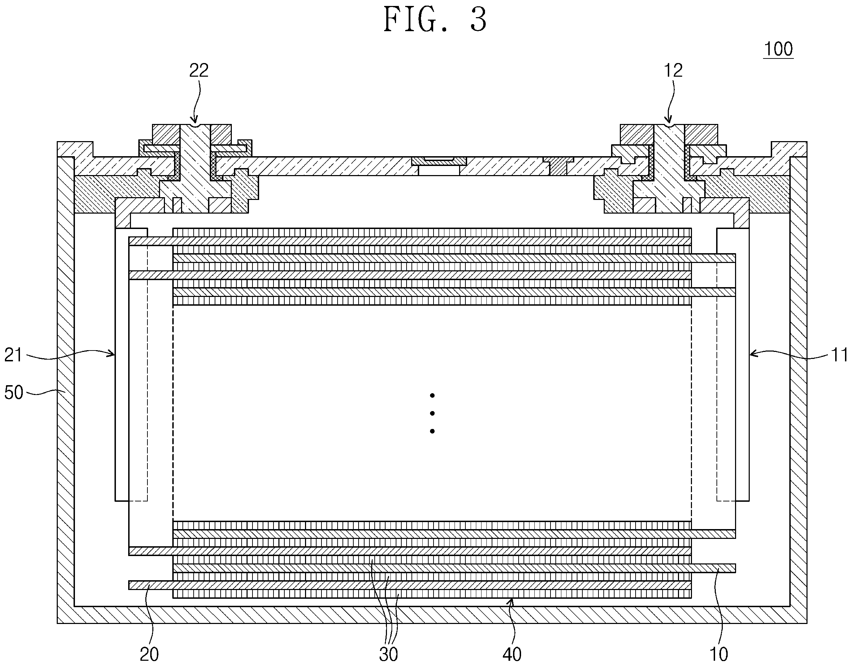

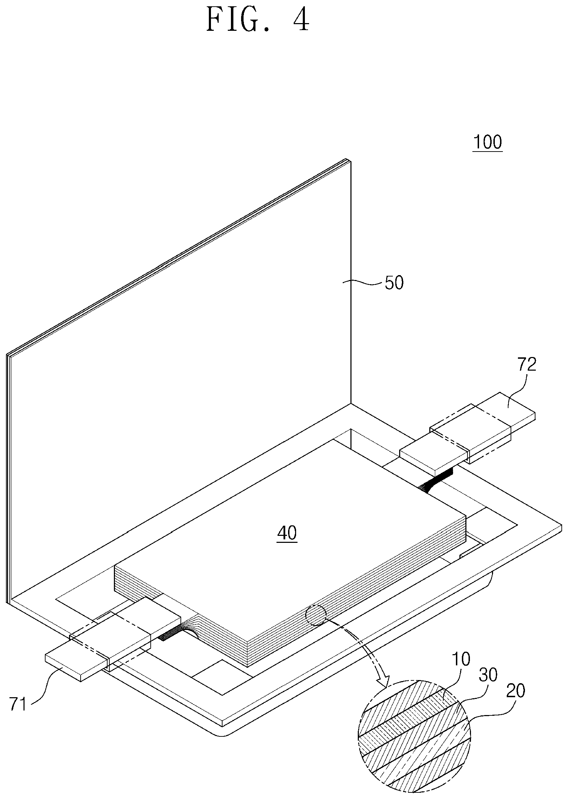

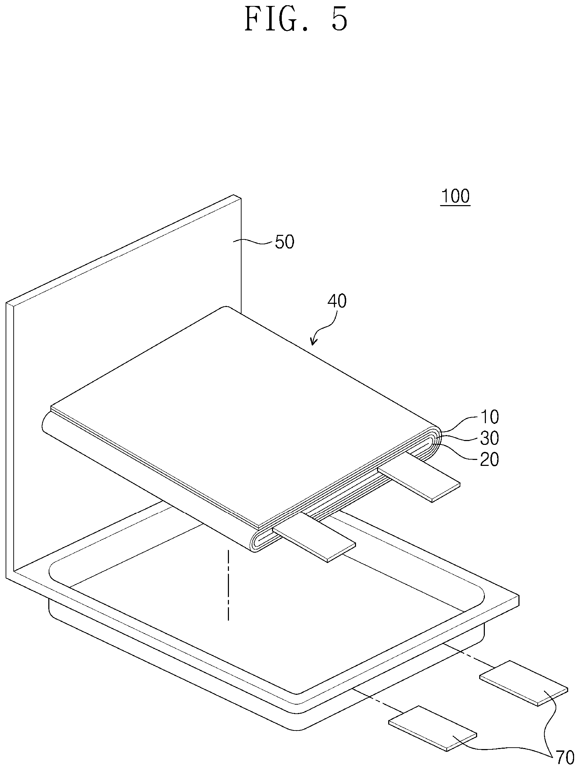

Based on the shape of a rechargeable lithium battery, the rechargeable lithium battery may be classified into cylindrical, prismatic, pouch, and coin types. FIGS. 2 to 5 are simplified diagrams illustrating a rechargeable lithium battery according to an example embodiment, FIG. 2 illustrating a cylindrical battery, FIG. 3 illustrating a prismatic battery, and FIGS. 4 and 5 illustrating pouch-type batteries. Referring to FIGS. 2 to 5, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70 illustrated in FIG.5, or a positive electrode tab 71 and a negative electrode tab 72 illustrated in FIG. 4, the electrode tab 70/71/72 constituting an electrical path for externally inducing a current generated in the electrode assembly 40 to outside of the battery 100.

In the example embodiments that follow, a detailed description of technical features repetitive to those of the rechargeable lithium battery discussed above with reference to FIGS. 1 to 5 will be omitted, and a difference thereof will be discussed in detail.

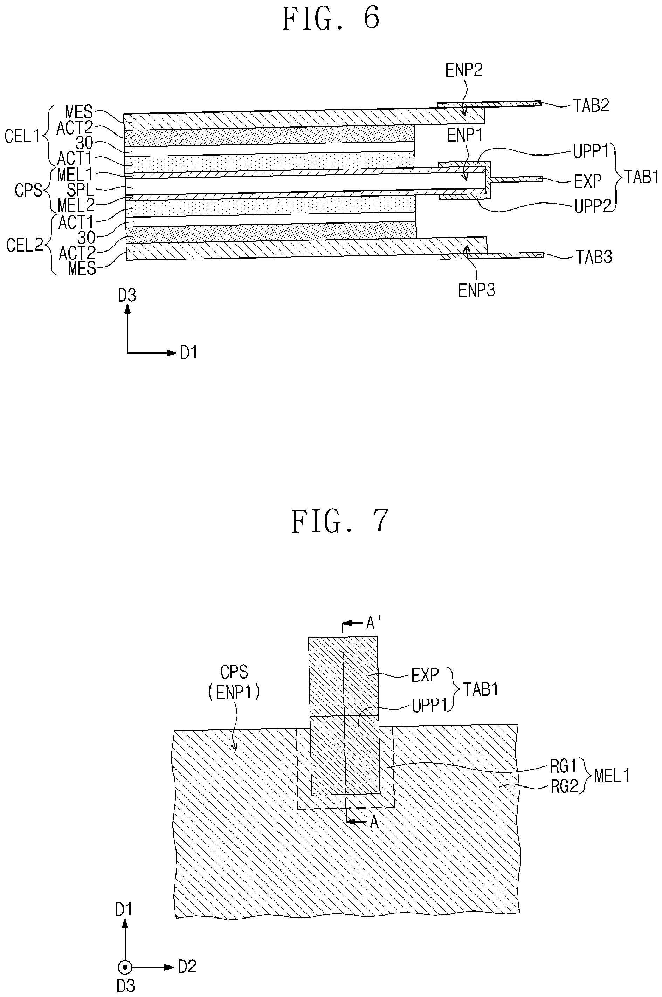

FIG. 6 is a cross-sectional view illustrating a rechargeable lithium battery according to an example embodiment of the present disclosure. Referring to FIG. 6, single bi-cell may include a composite substrate CPS, a first battery cell CEL1 on one surface of the composite substrate CPS, and a second battery cell CEL2 on another surface of the composite substrate CPS. A single bi-cell may be constituted by the first battery cell CEL1, the second battery cell CEL2, and the composite substrate CPS of FIG. 6. The first battery cell CEL1, the second battery cell CEL2, and the composite substrate CPS of FIG. 6 may constitute the electrode assembly 40 discussed above with reference to FIGS. 2 to 5.

Each, or at least one, of the first battery cell CEL1 and the second battery cell CEL2 may include a first active material layer ACT1, a separator 30, a second active material layer ACT2, and a metal substrate MES. The first active material layer ACT1 may be provided on the composite substrate CPS. The second active material layer ACT2 may be spaced apart from the first active material layer ACT1 across the separator 30. The metal substrate MES may be provided on the second active material layer ACT2.

The first active material layer ACT1 may be or include one of the positive electrode active material layer AML1 and the negative electrode active material layer AML2 that are discussed above with reference to FIG. 1. The second active material layer ACT2 may be or include the other of the positive electrode active material layer AML 1 and the negative electrode active material layer AML2 that are discussed above with reference to FIG. 1. In an example embodiment of the present disclosure, the first active material layer ACT1 may be or include the positive electrode active material layer AML1, and the second active material layer ACT2 may be or include the negative electrode active material layer AML2. The metal substrate MES may be or include the current collector COL1 or COL2 discussed above with reference to FIG. 1.

The composite substrate CPS may include a support layer SPL, and may also include a first metal layer MEL1 and a second metal layer MEL2 provided on opposite surfaces of the support layer SPL. The first metal layer MEL1 of the composite substrate CPS may be in contact with the first active material layer ACT 1 of the first battery cell CEL1. The second metal layer MEL2 of the composite substrate CPS may be in contact with the first active material layer ACT1 of the second battery cell CEL2. Each, or at least one, of the first and second metal layers MEL1 and MEL2 of the composite substrate CPS may correspond to one of the current collectors COL1 and COL2 that are discussed above with reference to FIG. 1.

The support layer SPL may include a polymer film. For example, the support layer SPL may include at least one of a polyethylene film, a polypropylene film, a polyvinylidene chloride film, or a multi-layered film including a combination thereof. The support layer SPL may have desired or improved ion permeability and improved mechanical strength.

Each, or at least one, of the first and second metal layers MEL1 and MEL2 may include at least one of aluminum, aluminum alloys, copper, copper alloys, nickel, nickel alloys, titanium, titanium alloys, iron, iron alloys, silver, and silver alloys.

In an example embodiment of the present disclosure, each, or at least one, of the first and second metal layers MEL1 and MEL2 may have a thickness of 200 nm to 5 µm. The support layer SPL may have a thickness of 3 µm to 10 µm. The thickness of the support layer SPL may be greater than the thickness of each, or at least one, of the first and second metal layers MEL1 and MEL2.

The composite substrate CPS may have a first end portion ENP1 at one end thereof. The metal substrate MES of the first battery cell CEL1 may include a second end portion ENP2 at one end thereof. The metal substrate MES of the second battery cell CEL2 may include a third end portion ENP3 at one end thereof.

A first tab TAB1 may be provided on the first end portion ENP1 of the composite substrate CPS. The first tab TAB1 may include a first connection portion UPP1, a second connection portion UPP2, and an extension portion EXP. The first connection portion UPP1 may be in contact with the first metal layer MEL1 of the composite substrate CPS. The second connection portion UPP2 may be in contact with the second metal layer MEL2 of the composite substrate CPS. The extension portion EXP may connect the first connection portion UPP1 and the second connection portion UPP2 to each other. The extension portion EXP may horizontally extend in a first direction D1 from the first end portion ENP1.

The first tab TAB1 may electrically connect the first metal layer MEL1 and the second metal layer MEL2 to each other. The first tab TAB1 may be configured to apply a voltage in common to the first metal layer MEL1 and the second metal layer MEL2.

A second tab TAB2 may be provided on the second end portion ENP2 of the metal substrate MES. The second tab TAB2 may be configured to apply a voltage to the metal substrate MES of the first battery cell CEL1. A third tab TAB3 may be provided on the third end portion ENP3 of the metal substrate MES. The third tab TAB3 may be configured to apply a voltage to the metal substrate MES of the second battery cell CEL2.

The first tab TAB1 may constitute one of positive and negative electrode tabs (or positive and negative electrode lead tabs) discussed above with reference to FIGS. 2 to 5. The second and third tabs TAB2 and TAB3 may constitute the other of positive and negative electrode tabs (or positive and negative electrode lead tabs) discussed above with reference to FIGS. 2 to 5.

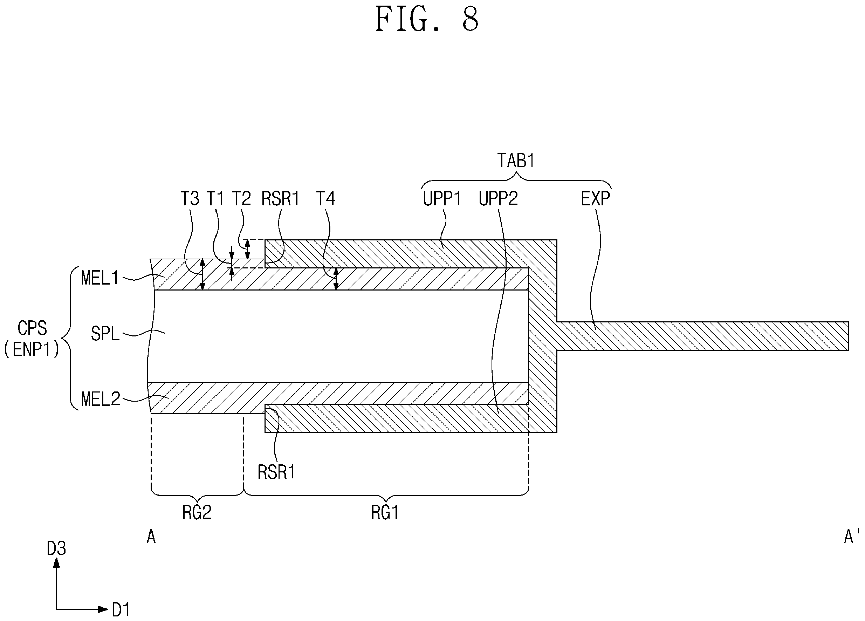

FIG. 7 is a plan view illustrating a first end portion of a composite substrate according to an example embodiment of the present disclosure. FIG. 8 illustrates a cross-sectional view taken along line A-A' of FIG. 7.

Referring to FIGS. 7 and 8, the first metal layer MEL1 at the first end portion ENP1 may include a first region RG and a second region RG2 different from the first region RG1. The first region RG1 may be or include a zone in contact with the first tab TAB1. The first region RG1 may vertically overlap the first tab TAB1, or overlap the first tab TAB1 in a longitudinal direction of the extension portion EXP. In an example embodiment, the first region RG1 may have a length of 5 mm to 30 mm in the first direction D1. The first region RG1 may have a width of 5 mm to 30 mm in a second direction D2.

The first region RG1 may have a first surface roughness. The second region RG2 may have a second surface roughness. The first surface roughness may be greater than the second surface roughness. For example, the first surface roughness may range from 1 µm to 3 µm or from 1 µm to 2 µm. The second surface roughness may range from 0.1 µm to 0.5 µm. A ratio (or the first surface roughness/second surface roughness) of the first surface roughness to the second surface roughness may range from 3.5 to 7. In the present disclosure, the surface roughness refers to a ten point average roughness (Rz). The ten point average roughness (Rz), is measured according to ISO 4287. Rz is defined as the arithmetic mean of the absolute heights of the five highest peaks and the depths of the five deepest valleys within the evaluation length of the surface texture profile.

The measurement is performed using a contact profilometer or an equivalent device. A stylus is used to scan the surface over a predefined evaluation length, and the surface profile is recorded. The recorded profile is then analyzed using a cutoff filter to remove long-wavelength components. From the filtered profile, the five highest peaks and the five deepest valleys are identified, and their absolute heights are averaged to calculate Rz.

Unless otherwise specified, the cutoff wavelength is set to 0.8 mm, and the evaluation length is determined according to the recommendations of ISO 4288.

According to an example embodiment of the present disclosure, a patterning process selectively performed on the first region RG1 may cause the first region RG1 to have a surface roughness greater than the surface roughness of the second region RG2. For example, the first region RG1 of each, or at least one, of the first and second metal layers MEL1 and MEL2 may selectively undergo at least one of laser patterning, physical patterning, and chemical patterning. It may thus be possible to selectively increase the surface roughness of the first region RG1.

The increase in surface roughness of the first region RG1 may increase an adhesive force between the first region RG1 and the first tab TAB1. According to the present disclosure, an increased welding specific surface area may be provided between the first region RG1 and the first tab TAB1. An anchoring effect may be generated between the first region RG1 and the first tab TAB1, which may improve welding strength. An increased contact area may be provided between the first region RG1 and the first tab TAB1, and thus an improved contact resistance may be achieved between the first region RG1 and the first tab TAB1.

Referring back to FIG. 8, the first region RG1 of the first metal layer MEL1 may include a first recess RSR1. The first recess RSR1 may receive the first connection portion UPP1 of the first tab TAB1. The first recess RSR1 and the first connection portion UPP1 may overlap each other.

The first connection portion UPP1 may include a first portion buried in the first recess RSR1 and a second portion on the first portion. The first portion may have a first thickness T1, and the second portion may have a second thickness T2. The second thickness T2 may be greater than the first thickness T1. The first thickness T1 may correspond to a depth of the first recess RSR1.

The second region RG2 of the first metal layer MEL1 may have a third thickness T3. The first region RG1 of the first metal layer MEL1 may have a fourth thickness T4. The fourth thickness T4 may be less than the third thickness T3. A difference between the third thickness T3 and the fourth thickness T4 may be substantially the same as the first thickness T1.

The second region RG2 of the second metal layer MEL2 may also include a first recess RSR1. The second connection portion UPP2 of the first tab TAB1 may be provided in the first recess RSR1 of the second metal layer MEL2.

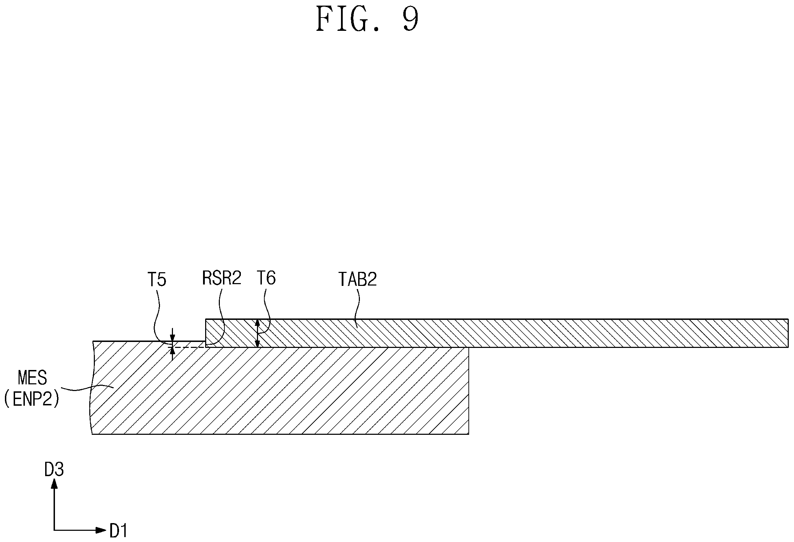

FIG. 9 is a cross-sectional view illustrating a second end portion of a metal substrate depicted in FIG. 6. Referring to FIG. 9, the metal substrate MES may include a second recess RSR2. The second tab TAB2 may be provided in the second recess RSR2. The second recess RSR2 may be or include a section formed by, e.g., welding or otherwise attaching the second tab TAB2 to the metal substrate MES.

The second tab TAB2 may include a third portion buried in the second recess RSR2 and a fourth portion on the third portion. The third portion may have a fifth thickness T5, and the fourth portion may have a sixth thickness T6. The fifth thickness T5 may correspond to a depth of the second recess RSR2.

Referring to FIGS. 8 and 9, the fifth thickness T5 may be less than the first thickness T1. For example, the depth of the second recess RSR2 may be less than the depth of the first recess RSR1. In an example embodiment of the present disclosure, a ratio (or T1/T5) of the first thickness T1 to the fifth thickness T5 may range from 2 to 100. The second recess RSR2 may be omitted.

An ultrasonic welding method may be used to attach the metal substrate MES and the second tab TAB2 depicted in FIG. 9 to each other. When the ultrasonic welding is used, a relatively large welding strength may be achieved between the metal substrate MES and the second tab TAB2. In contrast, to attach the first tab TAB1 to the first metal layer MEL1 on the support layer SPL depicted in FIG. 8, a welding method such as, e.g., laser welding may be used. In this case, a welding strength between the first metal layer MEL1 and the first tab TAB1 may be less than the welding strength between the metal substrate MES and the second tab TAB2.

In an example embodiment, the laser welding may use a laser to promptly melt a welding target. The laser welding may have high accuracy and precision to reduce or prevent thermal deformation of welding targets. Thus, the laser welding may be used for attachment between the first tab TAB1 and the first metal layer MEL1 on the support layer SPL depicted in FIG. 8. For example, the laser welding may use a gas laser, a solid laser, or a fiber laser.

According to an example embodiment, the surface roughness of the first region RG1 of the first metal layer MEL1 may be greater than the surface roughness of the second region RG2 of the first metal layer MEL1, and therefore the first tab TAB1 and the first metal layer MEL 1 may have therebetween the first recess RSR1 that is relatively deep. The first recess RSR1 may cause an increase in contact area between the first tab TAB1 and the first metal layer MEL1. Accordingly, a reduced contact resistance may be achieved between the first tab TAB1 and the first metal layer MEL1. The first recess RSR1 may cause an increase in welding strength (or adhesive force) between the first tab TAB1 and the first metal layer MEL1.

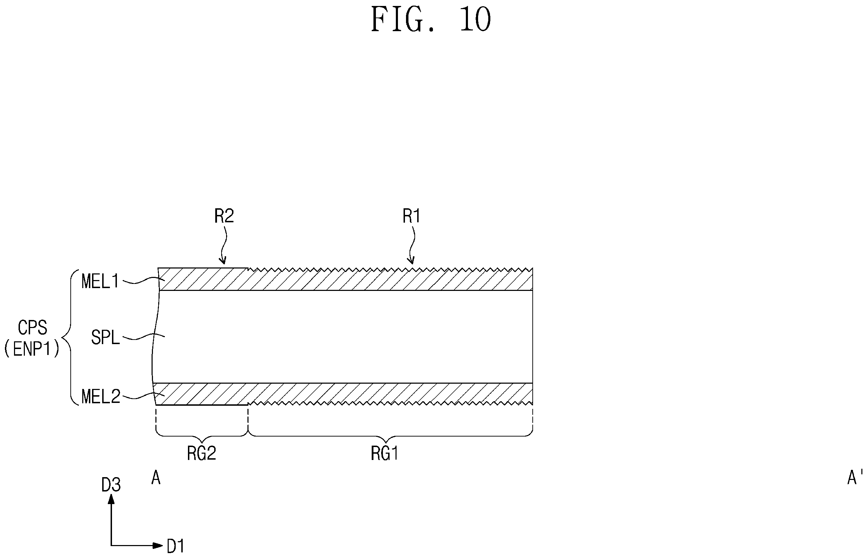

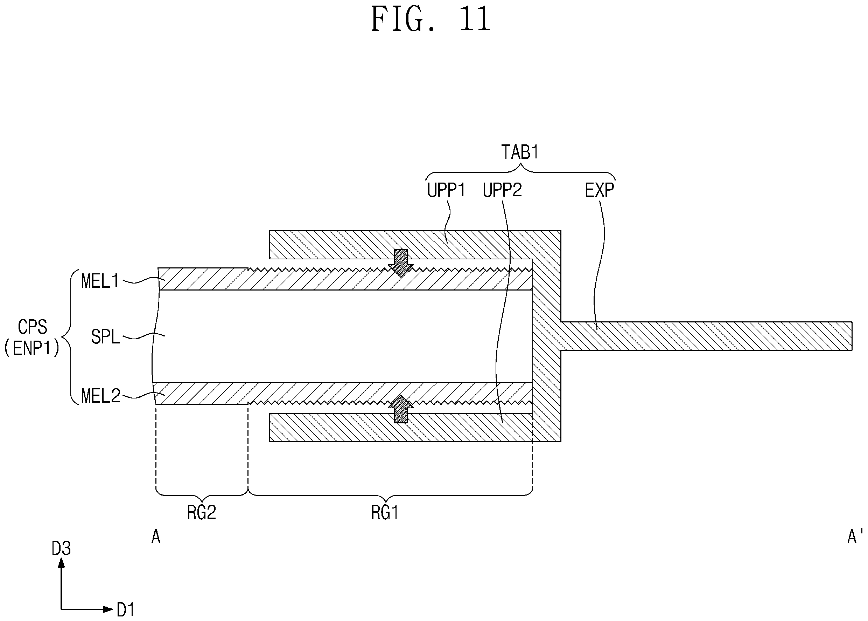

FIGS. 10 and 11 are cross-sectional views illustrating a method of fabricating a rechargeable lithium battery according to an example embodiment of the present disclosure. FIGS. 10 and 11 may each correspond to a cross-sectional view taken along line A-A' of FIG. 7.

Referring to FIG. 10, the composite substrate CPS may be prepared. First, the support layer SPL may be prepared as an organic polymer film. A deposition process such as, e.g., a vacuum deposition process or a plating process, may be employed to form a metal layer on the support layer SPL. For example, the first metal layer MEL1 and the second metal layer MEL2 may be correspondingly formed on opposite surfaces of the support layer SPL.

In an example embodiment, a vacuum deposition process will be described. The support layer SPL may be loaded into a vacuum deposition chamber. A metal wire in a metal evaporation chamber may be melted and evaporated at a temperature of 1,300°C to 2,000°C. The evaporated metal may pass through a cooling system in the vacuum deposition chamber, and eventually may be deposited on a surface of the support layer SPL. In a case of the plating method, the support layer SPL may be provided in a plating solution to form a metal layer on the surface of the support layer SPL.

The first region RG1 of the first metal layer MEL1 at the first end portion ENP1 may be changed to selectively have a first surface roughness R1. For example, a patterning process may be selectively performed only on the first region RG1 of the first metal layer MEL1. The patterning process may include one of laser patterning, physical patterning, and chemical patterning. Thus, the first region RG1 of the first metal layer MEL may have the first surface roughness R1. The second region RG2 of the first metal layer MEL1 may have a second surface roughness R2 less than the first surface roughness R1.

The first region RG1 of the second metal layer MEL2 at the first end portion ENP1 may be changed to also have the first surface roughness R1. A patterning process may be selectively performed only on the first region RG1 of the second metal layer MEL2. The patterning process on the second metal layer MEL2 may be performed simultaneously or sequentially with the patterning process on the first metal layer MEL1.

Referring to FIG. 11, the first connection portion UPP1 of the first tab TAB1 may be provided on the first region RG1 of the first metal layer MEL1. The second connection portion UPP2 of the first tab TAB1 may be provided on the first region RG1 of the second metal layer MEL2.

The first connection portion UPP1 of the first tab TAB1 may be welded to the first region RG1 of the first metal layer MEL1. The second connection portion UPP2 of the first tab TAB1 may be welded to the first region RG1 of the second metal layer MEL2. For example, the welding may be a laser welding.

Referring to FIG. 8, an increased surface roughness of the first region RG1 may cause the first region RG1 of the first metal layer MEL1 to be recessed to form the first recess RSR1 between the first metal layer MEL1 and the first connection portion UPP1. The first recess RSR1 may also be formed between the second metal layer MEL2 and the second connection portion UPP2. The first recess RSR1 and an increased surface roughness of the first region RG1 may cause an improvement in welding strength between the first tab TAB1 and the metal layer MEL1 or MEL2. The first tab TAB1 and the metal layer MEL1 or MEL2 may have therebetween an increased contact area and a reduced contact resistance.

The following description will focus on some example embodiments of the present disclosure. The following example embodiments are provided to aid in understanding of the present disclosure and are not intended to limit the scope of the present disclosure.

### Example Embodiment 1

A polyethylene terephthalate (PET) film having a thickness of 5 µm was prepared. A copper plating process was performed on opposite surfaces of the PET film to manufacture a composite substrate. A first metal layer was formed to have a uniform thickness on a top surface of the PET film, and a second metal layer was formed to have a uniform thickness on a bottom surface of the PET film. Each, or at least one, of the first metal layer and the second metal layer was formed to have a thickness of 1 µm.

A laser patterning process was selectively performed on a first region (20 mm in width) of one end portion of the composite substrate. The patterning process was performed on each, or at least one, of the first metal layer and the second metal layer. Thus, a surface roughness of the first region was selectively increased while maintaining a surface roughness of a second region different from the first region.

### Example Embodiment 2

A composite substrate was manufactured in the same method as in Example Embodiment 1, with a difference that the pattering process was intensified to increase the surface roughness of the first region.

### Example Embodiment 3

A composite substrate was manufactured in the same method as in Example Embodiment 1, with a difference that the first region was stripe-patterned through the patterning process.

### Example Embodiment 4

A composite substrate was manufactured in the same method as in Example Embodiment 3, with a difference that the pattering process was intensified to increase the surface roughness of the first region.

### Comparative Example 1

The patterning process was omitted in manufacturing the composite substrate of Example Embodiment 1.

### Comparative Example 2

A composite substrate was manufactured in the same method as in Example_Embodiment 1, with a difference that the pattering process was alleviated to less increase the surface roughness of the first region.

### Comparative Example 3

A composite substrate was manufactured in the same method as in Example_Embodiment 1, with a difference that the pattering process was performed at an intensity between the intensities of Example_Embodiment 1 and of Comparative Example 2.

### Measurement of Surface Roughness

A ten point average roughness (Rz) was measured for the composite substrate according to each of Example Embodiments 1 to 3 and Comparative Examples 1 to 3. For example, a surface roughness of each of a first region (on which a tab will be attached) and a second region (on which an active material layer will be attached) of a metal layer was measured.

### Tab Welding

A tab was welded to the composite substrate according to each of Example_Embodiments 1 to 3 and Comparative Examples 1 to 3. There was measured a welding strength, a cell ACR (alternating current resistance), and a cell DCR (direct current resistance) between the tab and the composite substrate (or the metal layer).

Table 1 below lists evaluation results of Example Embodiments 1 to 3 and Comparative Examples 1 to 3.

The ten point average roughness (Rz), was measured according to ISO 4287. The measurement was performed using a contact profilometer or an equivalent device. A stylus is used to scan the surface over a predefined evaluation length, and the surface profile is recorded. The recorded profile was then analyzed using a cutoff filter to remove long-wavelength components. From the filtered profile, the five highest peaks and the five deepest valleys were identified, and their absolute heights are averaged to calculate Rz. Unless otherwise specified, the cutoff wavelength was set to 0.8 mm, and the evaluation length is determined according to the recommendations of ISO 4288.

**[Table 1]**

| | Surface roughness of metal layer (Rz) | | | Welding strength (Kgf) | Cell ACR (mΩ) | Cell DCR (mΩ) |
|---|---|---|---|---|---|---|
| | Roughness of first region | Roughness of second region | Ratio | | | |
| Example Embodiment 1 | 1.1 | 0.3 | 3.67 | 9.4 | 3.22 | 11.43 |
| Example Embodiment 2 | 1.3 | 0.3 | 4.33 | 10.8 | 3.12 | 9.457 |
| Example Embodiment 3 | 1.5 | 0.3 | 5.00 | 11.0 | 2.99 | 9.24 |
| Example Embodiment 4 | 1.8 | 0.3 | 6.00 | 11.2 | 2.77 | 8.85 |
| Comparative Example 1 | 0.3 | 0.3 | 1.00 | 3.1 | 5.64 | 24.04 |
| Comparative Example 2 | 0.6 | 0.3 | 2.00 | 4.1 | 5.06 | 22.03 |
| Comparative Example 3 | 0.9 | 0.3 | 3.00 | 5.2 | 3.83 | 14.56 |

Referring to Table 1, when a ratio of the surface roughness of the first region to the surface roughness of the second region is greater than 3.5, there is a substantially abrupt increase in welding strength (see Comparative Example 3 and Example Embodiment 1). An increase in surface roughness of the first region causes an improvement in welding strength, ACR, and DCR (see Example Embodiments 1 to 4).

In a composite substrate according to the present disclosure, it may be possible to selectively increase a surface roughness of a first region to which a tab of a metal layer is attached. Thus, the composite substrate of the present disclosure may have both desired or improved welding strength and improved contact resistance to a tab. A rechargeable lithium battery including the composite substrate of the present disclosure may have desired or improved cell performance.

Although some example embodiments of the present disclosure have been discussed with reference to accompanying figures, it will be understood that various changes in form and details may be made therein without departing from the spirit and scope of the present disclosure. It will be apparent to those skilled in the art that various substitution, modifications, and changes may be thereto without departing from the scope and spirit of the present disclosure.

## Claims

1. A composite substrate (CPS) for a rechargeable lithium battery, the composite substrate comprising:
a support layer (SPL);
a first metal layer (MEL1) on a top surface of the support layer (SPL); and
a second metal layer (MEL2) on a bottom surface of the support layer (SPL),
wherein at least one of the first metal layer (MEL1) and the second metal layer (MEL2) includes:
a first region (RG1) to which a tab (TAB1) is configured to be attached; and
a second region (RG2) different from the first region (RG1),
wherein a ratio of surface roughness of the first region (RG1) to surface roughness of the second region (RG2) is in a range of 3.5 to 7,
wherein the surface roughness refers to a ten point average roughness (Rz), determined according to ISO 4287 and/or ISO 4288.

2. The composite substrate (CPS) according to claim 1, wherein the surface roughness of the first region (RG1) is in a range of 1 µm to 3 µm.

3. The composite substrate (CPS) according to any of the previous claims, wherein the surface roughness of the second region (RG2) is in a range of 0.1 µm to 0.5 µm.

4. The composite substrate (CPS) according to any of the previous claims, wherein a width of the first region (RG1) is in a range of 5 mm to 30 mm.

5. The composite substrate (CPS) according to any of the previous claims, wherein the surface roughness of the first region (RG1) is greater than the surface roughness of the second region (RG2).

6. The composite substrate (CPS) according to any of the previous claims, wherein the support layer (SPL) comprises at least one of a polyethylene film, a polypropylene film, a polyvinylidene chloride film, and a multi-layered film including a combination thereof.

7. The composite substrate (CPS) according to any of the previous claims, wherein at least one of the first metal layer (MEL1) and the second metal layer (MEL2) comprises at least one of aluminum, aluminum alloys, copper, copper alloys, nickel, nickel alloys, titanium, titanium alloys, iron, iron alloys, silver, and silver alloys.

8. The composite substrate (CPS) according to any of the previous claims, wherein:
a thickness of at least one of the first metal layer (MEL1) and the second metal layer (MEL2) is in a range of 200 nm to 5 µm, and
a thickness of the support layer is in a range of 3 µm to 10 µm.

9. The composite substrate (CPS) according to any of the previous claims, further comprising a tab (TAB1) attached to the first region (RG1) of the first metal layer (MEL1) and/or the second metal layer (MEL2),
wherein the first region (RG1) includes a first recess (RSR1) in which the tab (TAB1) is buried.

10. The composite substrate (CPS) of claim 9, wherein the tab (TAB1) comprises:
a first portion buried in the first recess (RSR1); and
a second portion on the first portion,
wherein a thickness (T2) of the second portion is less than a thickness (T1) of the first portion.

11. A rechargeable lithium battery, comprising:
a composite substrate (CPS) that includes a support layer (SPL) and a metal layer (MEL1) on the support layer (SPL); and
a battery cell (CEL1) on the metal layer (MEL1),
wherein the metal layer (MEL1) includes:
a first region (RG1) to which a tab (TAB1) is configured to be attached; and
a second region (RG2) different from the first region (RG1),
wherein a ratio of surface roughness of the first region (RG1) to surface roughness of the second region (RG2) is in a range of 3.5 to 7,
wherein the surface roughness refers to a ten point average roughness (Rz) determined according to ISO 4287 and/or ISO 4288;
or wherein the rechargeable lithium battery comprises a composite substrate (CPS) configured according to any of the previous claims.

12. The rechargeable lithium battery of claim 11, wherein the battery cell (CEL1) comprises:
a first active material layer (ACT1) on the metal layer (MEL1);
a separator (30) on the first active material layer (ACT1);
a second active material layer (ACT2) on the separator (30); and
a metal substrate (MES) on the second active material layer (ACT2).

13. The rechargeable lithium battery of claim 12, further comprising:
a first tab (TAB1) attached to the metal layer (MEL1); and
a second tab (TAB2) attached to the metal substrate (MES),
wherein the metal layer (MEL1) includes a first recess (RSR1) that is recessed by the first tab (TAB1),
wherein the metal substrate (MES) includes a second recess (RSR2) that is recessed by the second tab (TAB2), and
wherein a depth (T1) of the first recess (RSR1) is greater than a depth (T5) of the second recess (RSR2).

14. The rechargeable lithium battery of claim 13, wherein a ratio of the depth (T1) of the first recess (RSR1) to the depth (T5) of the second recess (RSR2) is in a range of 2 to 100.

15. The rechargeable lithium battery of claim 13 or 14, wherein:
the first tab (TAB1) includes a first portion buried in the first recess (RSR1),
the second tab (TAB2) includes a second portion buried in the second recess (RSR2), and
a thickness (T 1) of the first portion is greater than a thickness of the second portion.
